# EUROPEAN PATENT SPECIFICATION

(11) **EP 3 212 387 B1**
(45) Date of publication and mention of the grant of the patent: **19.05.2021**
(21) Application number: 15787611.1
(22) Date of filing: 30.10.2015
(51) Int. Cl.: B29C 70/44, B29C 33/38, B29C 33/56, B29D 99/00

(54) **MANUFACTURE OF I-SHAPED SHEAR WEB, METHOD AND APPARATUS**
HERSTELLUNG VON I-FÖRMIGEM SCHUBSTEG, VERFAHREN UND VORRICHTUNG
FABRICATION D'UNE BANDE DE CISAILLEMENT EN FORME DE I, PROCÉDÉ ET DISPOSITIF

(30) Priority: 30.10.2014 EP 14191152
(43) Date of publication of application: 06.09.2017
(73) Proprietor: LM WP Patent Holding A/S, 6000 Kolding (DK)
(72) Inventor: DE WAAL MALEFIJT, Bernard, Willem, 6200 Aabenraa (DK); JESPERSEN, Klavs, 6000 Kolding (DK); HAUGE PEDERSEN, Steven, 6000 Kolding (DK); NIELSEN, Michael Wenani, 6000 Kolding (DK)
(74) Representative: COPA Copenhagen Patents
(86) International application number: PCT/EP2015/075288
(87) International publication number: WO 2016/066816

(56) References cited:
- EP-A1- 1 555 104
- WO-A2-2009/140555
- DE-A1-102011 082 664
- US-A- 5 192 383

## Description

### Field of the Invention

The present invention relates to a method of manufacturing a wind turbine blade component in form of an I-shaped shear web (also called a spar beam), as well as a shear web mould system for manufacturing such a shear web.

### Background of the Invention

Wind turbine blades are often manufactured according to one of two constructional designs, namely a design where a thin aerodynamic shell is glued or otherwise bonded onto a spar beam, or a design where spar caps, also called main laminates, are integrated into the aerodynamic shell.

In the first design, the spar beam constitutes the load bearing structure of the blade. The spar beam as well as the aerodynamic shell or shell parts are manufactured separately. The aerodynamic shell is often manufactured as two shell parts, typically as a pressure side shell part and a suction side shell part. The two shell parts are glued or otherwise connected to the spar beam and are further glued to each other along a leading edge and trailing edge of the shell parts. This design has the advantage that the critical load carrying structure may be manufactured separately and therefore is easier to control. Further, this design allows for various different manufacturing methods for producing the beam, such as moulding and filament winding.

In the second design, the spar caps or main laminates are integrated into the shell and are moulded together with the aerodynamic shell. The main laminates typically comprise a high number of fibre layers compared to the remainder of the blade and may form a local thickening of the wind turbine shell, at least with respect to the number of fibre layers. Thus, the main laminate may form a fibre insertion in the blade. In this design, the main laminates constitute the load carrying structure. The blade shells are typically designed with a first main laminate integrated in the pressure side shell part and a second main laminate integrated in the suction side shell part. The first main laminate and the second main laminate are typically connected via one or more shear webs, which for instance may have a C-shaped or I-shaped cross-section. For very long blades, the blade shells may further along at least a part of the longitudinal extent comprise an additional first main laminate in the pressure side shell, and an additional second main laminate in the suction side shell. These additional main laminates may also be connected via one or more shear webs. This design has the advantage that it is easier to control the aerodynamic shape of the blade via the moulding of the blade shell part.

The shear webs act to reinforce the blade structure, and prevent excessive bending or buckling. Some blade designs use shear webs formed from beam members having I- or C-shaped cross-sections, the members having a main body with load-bearing flanges extending therefrom at opposed ends of the main body.

One method of manufacturing such I- or C-webs is through the provision of a sandwich panel body to which layers of fibre material are applied at the opposed ends in the shape of the desired flanges, the fibre material being infused with a resin and subsequently cured to form rigid flanges.

It is well-known to manufacture such shear webs in a suitably shaped mould structure, wherein a C-web can be manufactured using a relatively simple U-shaped mould, where the sandwich panel body extends between opposed walls of the mould structure, with the flanges formed through the layup of fibre material against the said walls.

Similarly, an I-web can be manufactured using a mould having a central support bounded by flexible support members on either side to define an adjustable channel between the flexible support members and the opposed mould walls. In this situation, the sandwich panel body is arranged on the central support, while the adjustable channel is arranged to receive fibre layers to form the flanges on a first side of the panel body, with the flanges on the second side of the panel body formed by the layup of fibre material against the opposed mould walls.

An example of such manufacturing systems can be seen in International Patent Application Publication No. WO 2013/037466 A1 and International Patent Application Publication No. WO 2014/095870 A1. However, these systems have the disadvantage of the necessity of removable inserts in order to be able to remove the I-web from the system. Further, the layup is rather complicated, since the fibre layers have to be folded around the inserts. This may provide wrinkles to the fibre layup.

In addition to the above, shear webs having such resin-infused fibre-based flanges can be an area of interest for the prevention of structural faults and cracks, due to the relatively large forces transferred through said flanges.

US 5 192 383 A discloses a method of continuously forming a layered composite material into a rigid structure as the material is moved from tan upstream located to a downstream location. The uncured layered composite material is putted from a supply at the upstream location through a forming die to form the material into a structural member. The document shows the formation of an H-shaped member with parallel feet by use of pressing heating dies. DE 10 2011 082664 A1 also discloses a mould system for manufacturing I-webs and utilises a removable insert for being able to remove the I-web from the mould system. WO 2009/140555 A2 discloses an I-shaped stiffener and a method for making the same. The stiffener is fabricated using preforms of laminated, unidirectional composite tape. The layup inter alia may involve forming layups into c-channels and assembling the c-channels.

It is an object of the invention to provide an alternative system and method for the manufacture of wind turbine blade components in form of shear webs, which provides for increased ease of manufacture combined with a reduced risk of structural failure.

### Summary of the Invention

This is according to a first aspect obtained by a method of manufacturing a wind turbine blade component in form of an I-shaped shear web, the shear web having a web body and a first web foot flange at a first end of the web body and a second web foot flange at a second end of the web body, wherein the method comprises the steps of:
a) providing an elongated lower web mould part having a moulding surface with a central portion, which is substantially flat, a first downwardly extending moulding surface portion at a first end of the lower web mould part, and a second downwardly extending moulding surface portion at a second end of the lower web mould part, wherein the first and the second moulding surface portions are diverging from the central portion along at least a part of the elongated lower web mould part,
b) arranging a number of first fibre layers on top of the elongated lower web mould part and covering the first downwardly extending moulding surface portion, the central portion, and the second downwardly extending mouldving surface portion,
c) arranging a number of second fibre layers on top of the first fibre layers
d) arranging an upper web mould part on top of the second fibre layers, the upper web mould part having a moulding surface with a central portion, which is substantially flat, a first upwardly extending moulding surface portion at a first end of the upper web mould part, and a second upwardly extending moulding surface portion at a second end of the upper web mould part, wherein the first and the second moulding surface portion are converging from the central portion along at least a part of the elongated upper web mould part,
e) wrapping ends of the second fibre layers against the first and the second upwardly extending moulding surface of the upper web mould part,
f) forming a mould cavity via the lower web mould part and upper web mould part,
g) supplying a resin to the mould cavity, and
h) curing or hardening the resin in order to form said wind turbine blade component.
In other words, the lower web mould part has a concave shape with diverging side parts for manufacturing first sides of the I-web foot flanges. The upper mould part also has a concave shape with converging side parts for manufacturing the other sides of the I-web foot flanges. This embodiment has several advantages over the prior art shear web mould, where the lower web mould part has converging side flanges, and where an outer mould part is utilised for forming the web foot flanges.

The invention is defined by the independent claims. Further embodiments are described in the dependent claims.

Due to the design of the lower web mould part, the first fibre layers may simply be draped over the concave moulding surface of the web part and do not need to be folded around side flanges. The first fibre layers will simply comply with the moulding surface of the lower mould. Further, the need for removable silicone inserts at the sides of the moulds is eliminated.

By using an upper web mould part, the need for external side mould flanges is also eliminated. The second fibre layers may be draped to the side flanges of the upper web mould part by first arranging the second fibre layers so that they are draped on top of the first fibre layers (and optional core material parts, later explained). After the upper web mould part has been arranged on top of the second fibre layers, the ends of the second fibre layers may simply be wrapped against the side flanges of the upper web mould part.

It is recognised that the mould system may be sectionised, in particular in the longitudinal or spanwise direction of the mould system. Thus, one section may manufacture a first longitudinal section of the shear web (or spar beam) and another section may manufacture a second longitudinal section of the shear web. The sectionised mould system may preferably be assembled so that the shear web may be manufactured as a unitary structure.

By substantially I-shaped is meant that the shear web has a shear web body and a first web foot flange at a first end of the web body, where a first flange part extends from a first side of the web body and a second flange part extends from a second side of the web body, and further a second web foot flange at a second end of the web body, where a first flange part extends from a first side of the web body and a second flange part extends from a second side of the web body.

According to a preferred embodiment, the method further involves a step between steps b) and c) where a core material of low density, such as balsawood, foamed polymer or the like, is arranged on top of the first fibre layers in the central part of the lower web mould part. Thus, the web body of the shear web may be formed as a sandwich construction having the first fibre layers as a first skin and the second fibre layers as a second skin.

In an advantageous embodiment, the mould cavity is formed by sealing at least a first outer mould part against the lower web mould part and the upper web mould part. The at least first outer mould part may advantageously comprise at least a first vacuum bag. Accordingly, it is seen that the mould cavity is preferably obtained by sealing a vacuum bag against the web mould parts. Where the moulding surfaces of the lower and upper web mould parts are air impermeable, the mould cavity may be formed by use of two vacuum bags, one for sealing the first web foot flange and a second for sealing the second web foot flange.

According to another preferred embodiment, the mould cavity prior to supplying the resin is evacuated by use of a vacuum source. Thus, it is seen that the shear web may be manufactured via a Vacuum Assisted Resin Transfer Moulding (VARTM) process. In principle, it is also possible to use RTM, where resin is injected into the mould cavity by use of an over-pressure.

The resin is preferably injected into the mould cavity, e.g. by drawing the resin in via the vacuum or under-pressure. However, it is in principle also possible to use prepreg material for the first fibre layers and/or the second fibre layers, in which case the resin can be supplied together with the fibre layers, or a combination of both approaches.

The upper web mould part may in a subsequent step be removed from the wind turbine component. Even though the web foot flanges are converging, the upper web mould part may easily be removed, since the web foot flanges are relatively flexible. Thus, they will simply bend away when the upper web mould part is lifted of the moulded wind turbine component. However, it may also be possible to pull the upper web mould part out from the converging web foot flange parts, in particular since a shear web will be tapering in the longitudinal direction in order to accommodate the shape of the wind turbine blade shell.

The wind turbine component may in a following step be removed from the lower web mould part. This may simply be done by lifting the wind turbine component from the lower web mould part, which can easily be done, since the side parts of the lower mould are diverging from the central part of the mould part. The lower mould part is advantageously coated with a release agent so that the wind turbine component easily may be lifted from the surface of the lower web mould part.

According to an advantageous embodiment, at least a first insert is arranged at the first end of the lower web part, wherein said first insert is adapted to provide a gradual transition from the web body to the first web foot flange. Advantageously also a first additional insert is arranged at the second end of the lower web part in order to provide a gradual transition from the web body to the second web foot flange.

According to another advantageous embodiment, a second insert is arranged at the first end of the lower web part, wherein said first insert is adapted to provide a gradual transition from the web body to another part the first web foot flange. The first insert may for instance be provided at a first side of the core material and the second insert at a second side of the core material.

The first insert and/or the second insert may advantageously be substantially wedge shaped. Thus, the insert may have an overall triangular appearance. In an advantageous embodiment, the inserts have a rounded outer surface, which the first fibre layers and the second fibre layers, respectively, may abut so that a round transition is obtained from the web body to the first web foot flange. In principle, the transition may also be obtained by a single insert.

As previously mentioned, the shear web will preferably have similar inserts at the transition between the web body and the second web foot flange.

The insert(s) may be made of a core material, such as balsawood or foamed polymer. It may also be made of a fibre-reinforced polymer material and may be a pultruded or extruded element.
The first fibre layers and second fibre layers are preferably glass fibres. But it may also be carbon fibres, aramid fibres, hemp fibres or the like.

In one advantageous embodiment, the first fibre layers are cut along lower surfaces of the downwardly extending moulding surface portions. Thus, the first fibre layers may simply be draped over the lower web mould part and then cut to the correct width by using a cutter, such as a sonic knife, along the edges of the lower mould part.

In another advantageous embodiment, the second fibre layers are cut along lower surfaces of the downwardly extending moulding surface portions or along upper surfaces of the upwardly extending moulding surface portions. Accordingly, the ends of the second fibre layers may be cut before the arrangement of the upper web mould part or after wrapping the second fibre layers against the upwardly extending moulding surface portions.

In yet another advantageous embodiment, the ends of the second fibre layers in step e) are retained against the first and the second upwardly extending moulding surface of the upper web mould part by use of retaining means. This prevents the second fibre layers from sliding down the side parts of the upper mould part, which could form wrinkles in the finished composite structure. The retaining means may for instance be magnets, e.g. by arranging one magnet part on the outer side of the upper mould part, and a second magnet part on the inner side of the upper mould part. But the retaining means may also be clamps, a tackifier or the like. The magnets or retaining means may be removed prior to forming the mould cavity.

According to the first aspect, there is also provides a shear web mould system for manufacturing a wind turbine component in form of an I-shaped shear web having a web body and a first web foot flange at a first end of the web body and a second web foot flange at a second end of the web body, wherein the system comprises:
- an elongated lower web mould part having a moulding surface with
   - a central portion, which is substantially flat,
   - a first downwardly extending moulding surface portion at a first end of the lower web mould part, and
   - a second downwardly extending moulding surface portion at a second end of the lower web mould part, wherein
   - the first and the second moulding surface portion are diverging from the central portion along at least a part of the elongated lower web mould part, and
- an elongated upper web mould part having a moulding surface with
   - a central portion, which is substantially flat,
   - a first upwardly extending moulding surface portion at a first end of the upper web mould part, and
   - a second upwardly extending moulding surface portion at a second end of the upper web mould part, wherein
   - the first and the second moulding surface portion are converging from the central portion along at least a part of the elongated upper web mould part.

The upper web mould part is adapted to be arranged on top of the lower web mould part and to at least partially form a mould cavity between the two web mould parts, where fibre material and core material may be arranged, after which a resin may be injected into the mould cavity.

According to an advantageous embodiment, the angle of the first downwardly extending moulding surface portion is substantially equal to the angle of the first upwardly extending surface portion. Thereby, the two web mould parts allow a substantially straight first web foot flange to be formed.

Preferably, the angle of the second downwardly extending moulding surface portion is substantially equal to the angle of the second upwardly extending surface portion, whereby a substantially straight second web foot flange may be formed.

The width of the central part of the upper web mould part preferably corresponds to the width of the central part of the lower web mould part. The width of the upper web mould part may also be slightly less that the width of the lower web mould part in order to accommodate for the converging web foot flanges.

In one advantageous embodiment, the first downwardly extending surface portion has an end portion, which corresponds to an end portion of the first web foot flange, and wherein the second downwardly extending surface portion has an end portion, which corresponds to an end portion of the second web foot flange. Thereby, first fibre layers may simply be draped over the lower web mould part and the ends of the fibre layers may be cut off by cutting along the edges of the lower mould part.
Correspondingly, the first upwardly extending surface portion may have an end portion, which corresponds to an end portion of the first web foot flange, and wherein the second upwardly extending surface portion has an end portion, which corresponds to an end portion of the second web foot flange.
In principle, the upper and the lower web mould part may be made from any suitable material. The parts may for instance comprise a relatively thin plate that defines the outer surface of the shear web. The plate may for instance be made of a fibre-reinforced polymer or a metal. However, according to an advantageous embodiment, the lower web mould part and/or the upper web mould part are made of a foamed polymer, e.g. PUR, covered by a hard surface coating, which provides the moulding surface.

The hard surface coating may advantageously be made from a polyurea material.

The upper and lower web mould parts are described as being elongated. However, it is recognised that the parts may be sectionised from smaller web mould parts that combined form an elongated web mould part.

There is further provided a method of manufacturing at least a part of a wind turbine blade comprising manufacturing at least one wind turbine blade component in the form of an I-web as described above, and joining said at least one wind turbine blade component to a second component to form at least a part of a wind turbine blade.

There is further provided a wind turbine blade component in the form of an I-web manufactured according to the above-described method.

There is further provided a wind turbine blade comprising a wind turbine blade component as described above.

There is further provided a wind turbine comprising at least one wind turbine blade as described above.

According to a second aspect, the present disclosure also provides an unclaimed method of manufacturing a wind turbine blade component in the form of an I-web, the method comprising the steps of:
providing a C-web having a web body and first and second flanges extending from respective first and second ends of a first side of said web body;
arranging a first moulding plate adjacent to said first end of said web body, and arranging a second moulding plate adjacent to said second end of said web body, said first and second moulding plates presenting respective first and second moulding surfaces located on a second side of said web body opposed to said first side;
arranging a first additional flange on said first moulding surface, and arranging a second additional flange on said second moulding surface, wherein a portion of said first and second additional flanges abut the surface of said web body on said second side of said web body; and
attaching said first and second additional flanges to said C-web to form an I-web. This method has the advantage that the C-web may be manufactured in a relative simple web mould and that the additional flange may be retrofitted to the C-web in order to form the I-web. This simplifies the manufacturing procedure compared to the state of the art methods and mould systems for manufacturing I-webs.

Preferably, the method further comprises the step of removing said first and second moulding plates from said I-web after said step of attaching.

Preferably, at least one of said steps of arranging first and second additional flanges comprises laying up a fibre material, e.g. glass fibre or carbon fibre sheets, such that said fibre material overlaps at least one of said first and second moulding surfaces and at least a portion of said second side of said web body. Thus, the fibre material will overlap a part of the web body, which may facilitate a large bonding surface to the C-web.

Preferably, said fibre material comprises layers of dry fibre material. In an additional or alternative aspect, said fibre material may comprise pre-pregs. Thus, it is seen that the additional flanges may be manufactured via dry fibre material, which is later wetted in for instance an RTM or VARTM method. This method may also be combined with the use of pre-pregs, or the additional flange may be manufactured by use of pre-pregs only.

In one embodiment, the method comprises the step of providing at least one pre-formed flange member, and attaching said pre-formed flange member to said c-web. This may simplify the method even further, since the additional flange may be pre-manufactured or pre-formed.

Preferably, said step of attaching said first and second additional flanges comprises infusing a fibre material with a resin, and curing said resin. Thus, it is seen that the additional flanges may be moulded onto or laminated onto for instance the web body of the C-web. Additionally or alternatively, said step of attaching may comprise applying an adhesive bond between at least one of said first and second additional flanges and said web body. Additionally or alternatively, said step of attaching may comprise a mechanical fastening, e.g. bolting, riveting. Accordingly, it is seen that the additional flanges may be attached to the C-web by either an adhesive or mechanical bonding, or by a combination thereof.

Preferably, said steps of arranging said first and second moulding plates comprise releasably attaching at least one moulding plate to at least one end of said c-web, preferably to at least one of said first and second flanges.

Preferably, said step of releasably attaching comprises clamping said at least one moulding plate to said at least one flange.

Preferably, at least one of said steps of arranging first and second moulding plates comprises orientating said at least one first and second moulding plate to provide for a desired angle of said at least one first and second moulding surface relative to said web body. The plates are preferably designed so that they are relatively stiff in the transverse direction and provides a flat surface for the web flange, but relatively flexible in the longitudinal direction so that the angle of the web flange may be varied along the span of the wind turbine blade.

Preferably, said step of providing a C-web comprises forming a C-web using a C-web mould, removing said C-web from said mould, and supporting C-web on said first side of said C-web.

There is further provided a method of manufacture of at least a part of a wind turbine blade comprising manufacturing at least one wind turbine blade component in the form of an I-web as described above, and joining said at least one wind turbine blade component to a second component to form at least a part of a wind turbine blade.

There is further provided a wind turbine blade component in the form of an I-web manufactured according to the above-described method.

There is further provided a wind turbine blade comprising a wind turbine blade component as described above.

There is further provided a wind turbine comprising at least one wind turbine blade as described above.

### Description of the Invention

The invention is explained in detail below with reference to an embodiment shown in the drawings, in which
Fig. 1 shows a wind turbine,
Fig. 2 shows a schematic view of a wind turbine blade,
Fig. 3 shows a schematic view of a cross-section of a wind turbine blade,
Figs. 4-11 illustrate various steps in manufacturing a shear web in accordance with the invention,
Fig. 12 shows an alternative embodiment for the lower web mould part according to the invention,
Figs. 13a-d show various embodiments for inserts for use in the method according to the invention,
Fig. 14 shows an alternative embodiment of a web mould system according to the invention,
Fig. 15 shows an embodiment for manufacturing a C-shaped shear web part,
Fig. 16 shows an embodiment for attaching additional flanges to the c-shaped shear web part in order to form an I-shaped shear web,
Figs. 17a-h illustrate various steps in the layup of material for a web foot flange,
Fig. 18 shows an embodiment of a fibre reinforcement package for a web foot flange,
Fig. 19 illustrates a step for attaching a fibre reinforcement pac to the core material of a web body, and
Fig. 20 shows an alternative embodiment for the lower web mould part according to the invention.

### Detailed Description

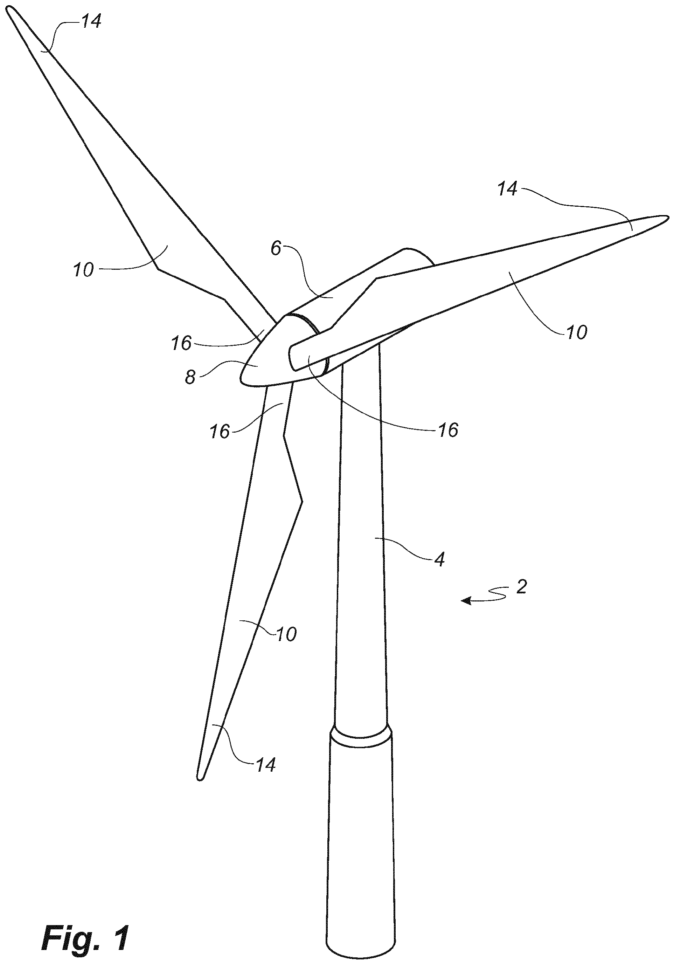

Fig. 1 illustrates a conventional modern upwind wind turbine according to the so-called "Danish concept" with a tower 4, a nacelle 6 and a rotor with a substantially horizontal rotor shaft. The rotor includes a hub 8 and three blades 10 extending radially from the hub 8, each having a blade root 16 nearest the hub and a blade tip 14 farthest from the hub 8. The rotor has a radius denoted R.

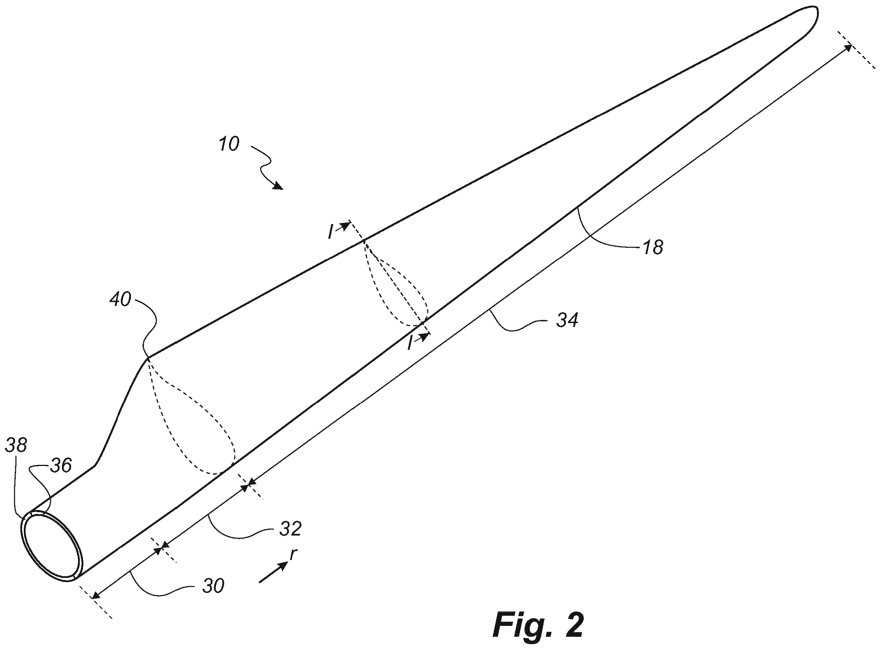

Fig. 2 shows a schematic view of a wind turbine blade 10. The wind turbine blade 10 has the shape of a conventional wind turbine blade and comprises a root region 30 closest to the hub, a profiled or an airfoil region 34 farthest away from the hub and a transition region 32 between the root region 30 and the airfoil region 34. The blade 10 comprises a leading edge 18 facing the direction of rotation of the blade 10, when the blade is mounted on the hub, and a trailing edge 20 facing the opposite direction of the leading edge 18.

The airfoil region 34 (also called the profiled region) has an ideal or almost ideal blade shape with respect to generating lift, whereas the root region 30 due to structural considerations has a substantially circular or elliptical cross-section, which for instance makes it easier and safer to mount the blade 10 to the hub. The diameter (or the chord) of the root region 30 may be constant along the entire root area 30. The transition region 32 has a transitional profile gradually changing from the circular or elliptical shape of the root region 30 to the airfoil profile of the airfoil region 34. The chord length of the transition region 32 typically increases with increasing distance *r* from the hub. The airfoil region 34 has an airfoil profile with a chord extending between the leading edge 18 and the trailing edge 20 of the blade 10. The width of the chord decreases with increasing distance *r* from the hub.

A shoulder 40 of the blade 10 is defined as the position, where the blade 10 has its largest chord length. The shoulder 40 is typically provided at the boundary between the transition region 32 and the airfoil region 34.

It should be noted that the chords of different sections of the blade normally do not lie in a common plane, since the blade may be twisted and/or curved (i.e. pre-bent), thus providing the chord plane with a correspondingly twisted and/or curved course, this being most often the case in order to compensate for the local velocity of the blade being dependent on the radius from the hub.

The blade is typically made from a pressure side shell part 36 and a suction side shell part 38 that are glued to each other along bond lines at the leading edge 18 and the trailing edge of the blade 20.

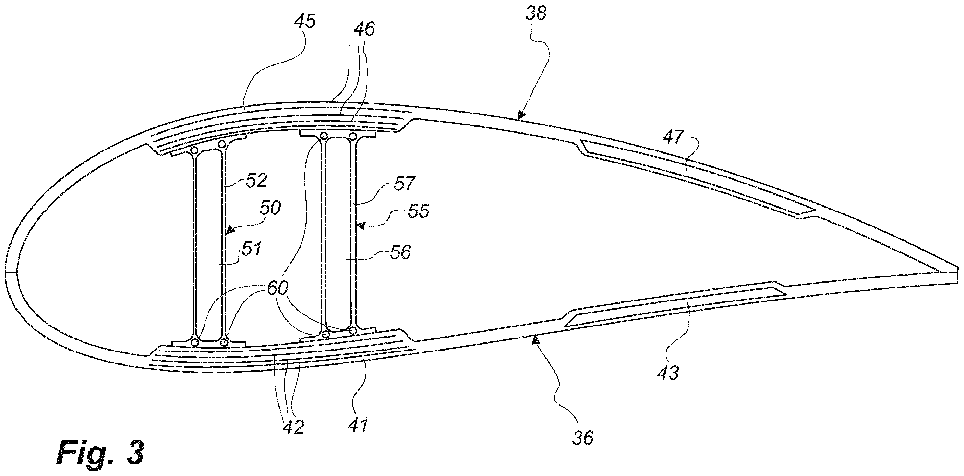

Fig. 3 shows a schematic view of a cross section of the blade along the line I-I shown in Fig. 2. As previously mentioned, the blade 10 comprises a pressure side shell part 36 and a suction side shell part 38. The pressure side shell part 36 comprises a spar cap 41, also called a main laminate, which constitutes a load bearing part of the pressure side shell part 36. The spar cap 41 comprises a plurality of fibre layers 42 mainly comprising unidirectional fibres aligned along the longitudinal direction of the blade in order to provide stiffness to the blade. The suction side shell part 38 also comprises a spar cap 45 comprising a plurality of fibre layers 46. The pressure side shell part 38 may also comprise a sandwich core material 43 typically made of balsawood or foamed polymer and sandwiched between a number of fibre-reinforced skin layers. The sandwich core material 43 is used to provide stiffness to the shell in order to ensure that the shell substantially maintains its aerodynamic profile during rotation of the blade. Similarly, the suction side shell part 38 may also comprise a sandwich core material 47.

The spar cap 41 of the pressure side shell part 36 and the spar cap 45 of the suction side shell part 38 are connected via a first shear web 50 and a second shear web 55. The shear webs 50, 55 are in the shown embodiment shaped as substantially I-shaped webs. The first shear web 50 comprises a shear web body and two web foot flanges. The shear web body comprises a sandwich core material 51, such as balsawood or foamed polymer, covered by a number of skin layers 52 made of a number of fibre layers. The second shear web 55 has a similar design with a shear web body and two web foot flanges, the shear web body comprising a sandwich core material 56 covered by a number of skin layers 57 made of a number of fibre layers. The sandwich core material 51, 56 of the two shear webs 50, 55 may be chamfered near the flanges in order to transfer loads from the webs 50, 55 to the main laminates 41, 45 without the risk of failure and fractures in the joints between the shear web body and web foot flange. However, such a design will normally lead to resin rich areas in the joint areas between the legs and the flanges. Further, such resin rich area may comprise burned resin due to high exothermic peeks during the curing process of the resin, which in turn may lead to mechanical weak points.

In order to compensate for this, a number of filler ropes 60 comprising glass fibres are normally arranged at these joint areas. Further, such ropes 60 will also facilitate transferring loads from the skin layers of the shear web body to the flanges. However, according to the invention, alternative constructional designs are possible.

The blade shells 36, 38 may comprise further fibre-reinforcement at the leading edge and the trailing edge. Typically, the shell parts 36, 38 are bonded to each other via glue flanges in which additional filler ropes may be used (not shown). Additionally, very long blades may comprise sectional parts with additional spar caps, which are connected via one or more additional shear webs.

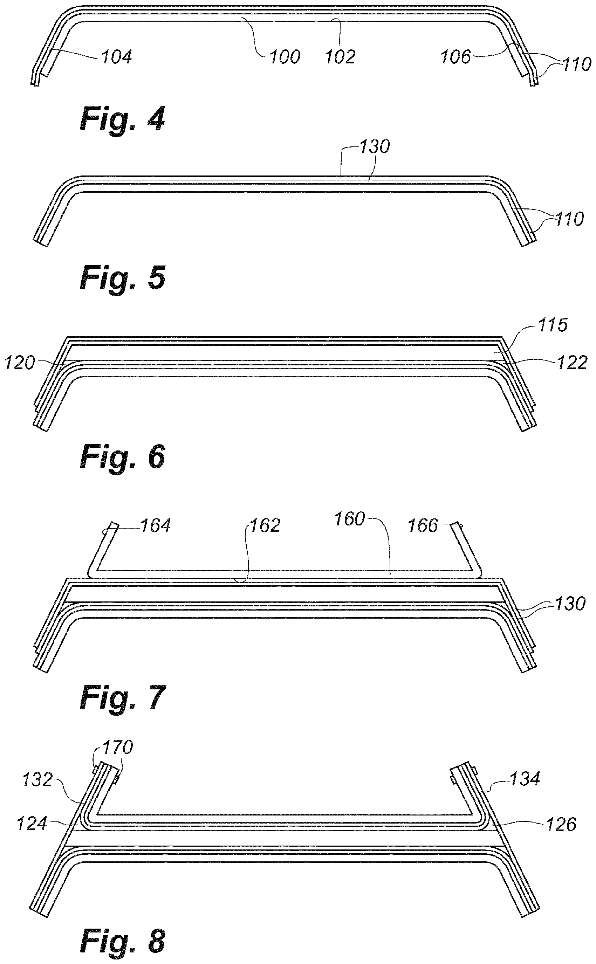

Figs. 4-11 illustrate various steps in a method of manufacturing a shear web and a shear web moulding system according to the invention.

First an elongated lower web mould part 100 is provided as shown in Fig. 4. The lower web mould part 100 has a moulding surface, which defines an outer part of a shear web manufactured via the shear web moulding system. The moulding surface comprises a central portion 102, which is substantially flat, and which is utilised to form a web body of the shear web. Further, the lower web mould part 100 comprises a first side part at a first side end of the lower web mould part 100, the first side part having a first downwardly extending moulding surface portion 104. Similarly, the lower web mould part 100 comprises a second side part at a second side end of the lower shear web part 100, the second side part having a second downwardly extending moulding surface portion 106. The first and the second moulding surface portions 104, 106 are diverging from the central portion 102 along at least a part of the elongated lower web mould part 100.

In a next step, a number of first fibre layers 110 are arranged on top of the elongated lower web mould part 100 and cover the first downwardly extending moulding surface portion 104, the central portion 102, and the second downwardly extending moulding surface portion 106. The first fibre layers 110 form part of an outer skin of the finished shear web. Due to the design of the lower web mould part 100, the first fibre layers 110 may simply be draped over the concave moulding surface of the web part and do not need to be folded around side flanges. The first fibre layers 110 will simply comply with the moulding surface of the lower mould. Further, the need for removable inserts as disclosed in WO 2013/037466 A1 and WO 2014/095870 at the sides of the moulds is eliminated.

In a subsequent step, ends of the first fibre layers 110 are cut by use of a cutter, which is moved along the lower edges of the side parts, which is illustrated in Fig. 5. Alternatively, flange ends can be cut after moulding and curing of the component is complete.

In following steps, shown in Fig. 6, a core material 115, such as balsawood or foamed polymer, is arranged on top of the first fibre layers 110 in the central part 102 of the lower web mould part 100. Thus, the web body of the shear web may be formed as a sandwich construction having the first fibre layers as a first skin and the second fibre layers as a second skin. Further, a first insert 120 may be arranged at the first side end of the lower web part 100 and at a first side of the core material 115. The first insert 120 may have a shape so as to provide a gradual transition from the web body to a first web foot flange. Similarly, a second insert 122 may be arranged at the second side end of the lower web part 100 and at the first side of the core material 115. The second insert 122 may have a shape so as to provide a gradual transition from the web body to a second web foot flange. Advantageously, the first insert 120 and second insert 122 may be a fixed part of the web body core unit 115.

Then a number of second fibre layers 130 are arranged on top of the core material 115 so that sides of the second fibre layers 130 are draped against the ends of the first fibre layers 110.

In a next step, shown in Fig. 7, an elongated upper web mould part 160 is arranged on top of the second fibre layers 130. The upper web mould part 160 has a moulding surface with a central portion 162, which is substantially flat, a first upwardly extending moulding surface portion 164 at a first side end of the upper web mould part 160, and a second upwardly extending moulding surface portion 166 at a second side end of the upper web mould part 160. The first and the second moulding surface portions 164, 166 are converging from the central portion 160 along at least a part of the elongated upper web mould part 160.

The central portion 162 of the upper shear web part 160 preferably has a width equal to or slightly less than the width of the central portion 102 of the lower shear web part 100. Further, the two shear web parts 100, 160 are preferably arranged so that the downwardly extending moulding surface portions 104, 106 are aligned with the upwardly extending moulding surface portions 164, 166, respectively.

In a subsequent step, shown in Fig. 8, the ends of the second fibre layers 130 are wrapped against the upwardly extending moulding surface portions 164, 166 and are cut to the proper lengths, e.g. by cutting along the upper edges of the upper web mould part 170. The second fibre layers 160 are retained against the upwardly extending moulding surface portions 164, 166 in order to prevent the fibre material from sliding down by use of retaining means in form of magnets 170, which are arranged with one magnet part on an outer side of the mould part and a second magnet part on an inner side of the mould part. It is also possible make the upper web mould part 160 of a magnetisable material or integrating such a material into the upper web mould part 160, in which case only an outer magnet is necessary in order to retain the fibre material against the moulding surfaces. Use of other mechanical fastening clamps is also possible.

Further, a first additional insert 124 may be arranged at the first side end of the lower web part 100 and at a second side of the core material 115. The first additional insert 124 may have a shape so as to provide a gradual transition from the web body to a first web foot flange. Similarly, a second additional insert 126 may be arranged at the second side end of the lower web part 100 and at the second side of the core material 115. The second additional insert 126 may have a shape so as to provide a gradual transition from the web body to a second web foot flange.

Additionally, a number of additional first fibre layers 132 may be provided for the first web foot flange, and a number of additional second fibre layers 134 may be provided for the second web foot flange.

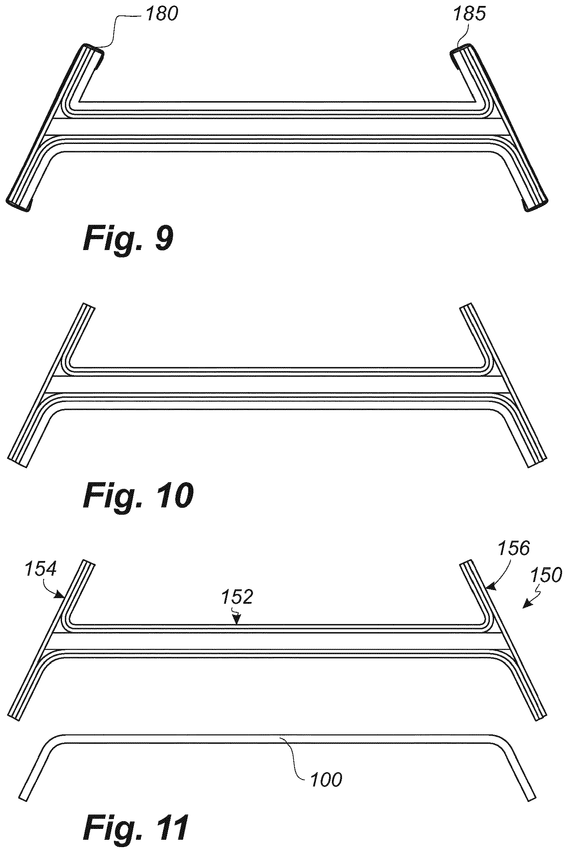

In a following step, shown in Fig. 9, a first outer mould part in form of a flexible vacuum bag 180 is sealed against the lower web mould part 100 and the upper web mould part 160 at a first side of the mould parts 100, 160. Similarly, a second outer mould part in form of a flexible vacuum bag 185 is sealed against the lower web mould part 100 and the upper web mould part 160 at a second side of the mould parts 100, 160. Thus, a mould cavity is formed between the lower web mould part 100, the upper web mould part 160, and the two vacuum bags 180, 185. It is also possible to use a single vacuum bag only. Further, it is possible to use rigid outer mould parts for forming the mould cavity at the web foot flanges.

In a next step, not shown, a vacuum source is connected to the mould cavity, and the mould cavity is evacuated by use of the vacuum source. The mould cavity is further connected to a resin source, and liquid resin is injected into the mould cavity so as to wet the fibre material and the core material. Thus, it is seen that the shear web is preferably manufactured via a Vacuum Assisted Resin Transfer Moulding (VARTM) process. The resin is preferably injected into the mould cavity, e.g. by drawing the resin in via the vacuum or under-pressure. However, it is in principle also possible to use prepreg material for the first fibre layers and/or the second fibre layers, in which case the resin can be supplied together with the fibre layers. It is also possible to apply a combination of the two approaches, i.e. the use of prepreg material and additional resin injected into the mould cavity.

In a following step, shown in Fig. 10, the upper web mould part 160 is removed from the wind turbine component. Even though the web foot flanges are converging, the upper web mould part 160 may readily be removed, since the web foot flanges are relatively flexible. Thus, they will simply bend away when the upper web mould part is lifted of the moulded wind turbine component. However, it may also be possible to pull the upper web mould part out from the converging web foot flange parts horizontally first, in particular since a shear web will be tapering in the longitudinal direction in order to accommodate the shape of the wind turbine blade shell. Following this, a vertical detachment is then more readily possible without loading the flanges 154, 156 of the web.

In a final step, shown in Fig. 11, the shear web 150 is removed from the lower web mould part 100, and it is seen that the shear web 150 is substantially I-shaped having a shear web body 152, a first web foot flange 154, and a second web foot flange 156.

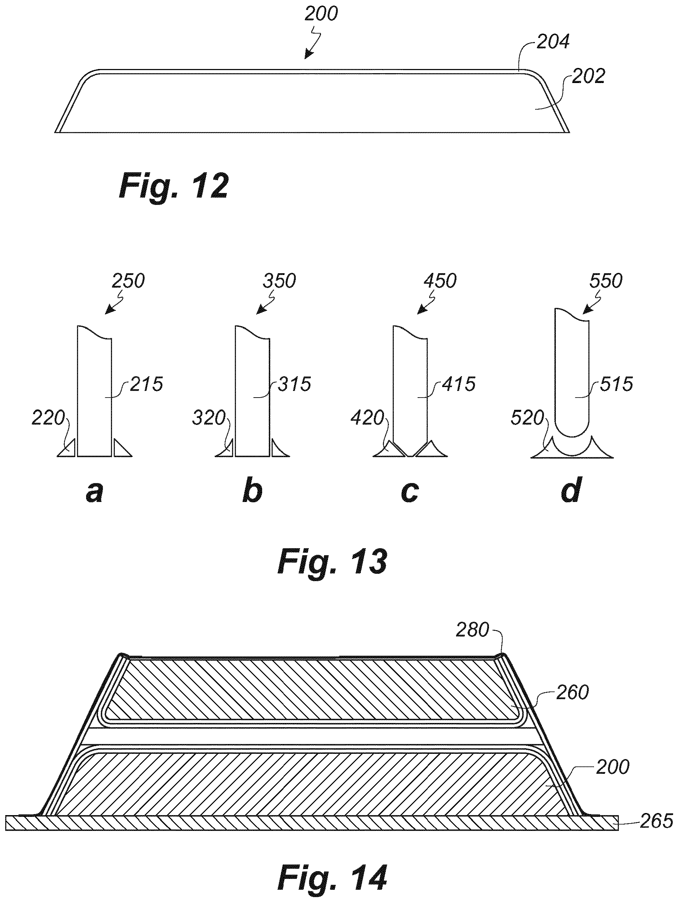

In Figs. 4-11, the lower web mould part 100 and the upper web mould part 160 have been depicted as being substantially plate shaped. The web mould parts may for instance comprise fibre-reinforced plates or metallic plates. However, it is also possible to form the web mould parts as solid parts. Fig. 12 shows an alternative embodiment of a lower web mould part 200, and where the lower web mould part comprises a core part 202 made of a foamed polymer, e.g. PUR, which is covered by a hard surface coating 204, e.g. a polyurea material.

Similarly, the upper web mould part may also be made as a solid part. One embodiment, utilising such solid parts is shown in Fig. 14. In this setup, the lower web mould 200 part is arranged on a flat table 265, and an upper web mould part 260 is arranged on top of the fibre material, core material, and inserts that are arranged in the mould cavity. The table is airtight, whereby a single vacuum foil 280 may be arranged so as to cover the lower web mould part 200 and the upper web mould part 260 and sealed against the table 265.

It is not shown in Fig. 14, but a backing plate may further be arranged at the end parts (or attachment parts) of the web foot flanges in order to provide a straight moulding surface. The plate should be stiff enough to provide a straight surface, when a vacuum is drawn to the mould cavity. However, it should also be flexible enough to be twisted slightly in the longitudinal direction in order to comply to different web foot flange angles.

It is also recognised that the inserts arranged at the ends of the shear web body may be designed in a number of ways. Figs. 13a-d illustrate four different embodiments, which are intended as examples only.

Fig. 13a shows a first embodiment of a shear web 250, where triangular inserts 220 are arranged at either side of a core material 215 of a shear web body.
Fig. 13b shows a second embodiment of a shear web 350, where substantially triangular inserts 320 are arranged at either side of a core material 315 of a shear web body. The inserts of this embodiment differ from the first embodiment in that the outer surfaces of the inserts are curved in order to provide a more gradual transition to the web foot flange.

Fig. 13c shows a third embodiment of a shear web 450, where substantially triangular inserts 420 are arranged at either side of a core material 415 of a shear web body. The third embodiment differs from the second embodiment in that the core material is chamfered and the inserts extend along an end part of said core material. The chamfering of the shear web body may also be rounded in order to provide a more gradual transition. Of course the inner side of the inserts 420 may have a complimentary shape. In a preferred embodiment, a number of fibre layers (not shown) are arranged between the core material 415 of the shear web body and the inserts 420 and advantageously extend to a part of the skin of the sandwich construction of the shear web body. This embodiment has the advantage that part of the loads is transferred to the middle of the web foot flange, while other loads are distributed to the sides of the web foot flange. Thus, a more even load is distributed across the web foot flange.

Fig. 13d shows a fourth embodiment of a shear web 550, where a unitary insert 520 is arranged at an end part of a core material 515 of a shear web body. The end part of the core material 515 and the insert 520 may be formed as a male-female connection as shown in the figure.

Fig. 14 illustrates an alternative web mould system for manufacturing an I-shaped shear web. The web mould system comprises a lower web mould part 200 and an upper web mould part 260, where the two parts are formed as solid mould parts. The web mould parts may for instance comprise a core part made of a foamed polymer, which is covered by a hard surface coating, e.g. a polyurea material. The lower web mould part 200 is arranged on top of a flat airtight table surface 265. The fibre material and core material forming part of the finished shear web is arranged between the lower web mould part 200 and the upper web mould part 260. A mould cavity is formed by arranging a vacuum bag 280 on top of the two web mould parts 200, 260 and sealing it to the airtight table surface 265. The setup may additionally utilise web foot plates (not shown) at the sides in order to provide a hard flat surface to facilitate a flat mounting surface for the web foot flanges.

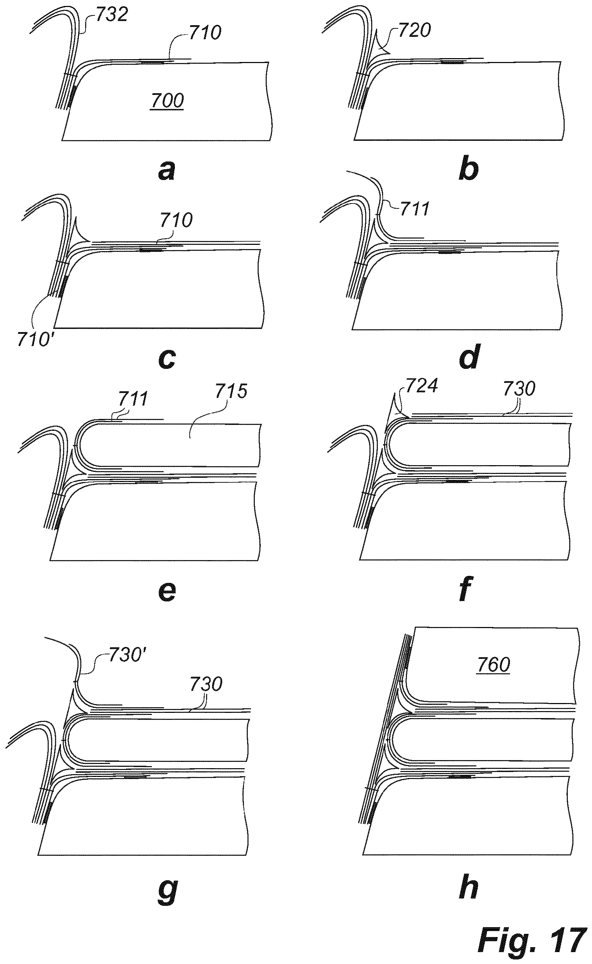

In Figs. 4-11, a general layup and manufacturing method have been shown. Figs. 17a-h show a more detailed example of how the layup procedure for the material for a web foot flange may be carried out.

In a first step shown in Fig. 17a, a fibre-reinforcement package (advantageously a glass fibre package) is arranged on top of a lower web mould part 700. The fibre-reinforcement package comprises first fibre layers 710', which form an inner part of a first side of the web foot flange, and a number of additional first fibre layers 732, which form an outer part of the web foot flange. The first fibre layers 710' and the additional first fibre layers 732 may be stitched to each other or otherwise bonded to each other. The glass fibre package may be adhered to the lower web mould part 700 via double adhesive tape, a tackifier or the like.

In a second step, shown in Fig. 17b, a first insert 720 is arranged on top of the first fibre layers 710', the first insert 710 having a substantially triangular cross-section.

In a third step, shown in Fig. 17c more first fibre layers 710 are arranged on top of the lower web mould part 700, the fibre layers 710 forming a skin of the web body of the shear web.

In a fourth step, shown in Fig. 17d, internal reinforcement layers 711 are arranged on top of the first fibre layers 710, 710' and the first insert 720. The internal reinforcement layers 711 provide an improved bonding to the first insert 720 and further ensure that parts of the forces taken up from the web body are transferred to a central part of the web foot flange and not only the sides. The internal reinforcement layers 711 may be provided with a stitching line, which may be used for aligning the internal reinforcement layers 711 correctly in relation to the first insert 720 and other parts making up the final shear web.

In a fifth step, shown in Fig. 17e, a core material 715 is arranged with a first side on top of a part of the internal reinforcement material 711 and the first fibre layers 710, 710', and the remaining part of the internal reinforcement material 711 is wrapped around to a second side of the core material 715.

Then, in a sixth step, shown in Fig. 17f, a second insert 724 and second fibre layers 730 are arranged at a second side of the shear web and core material 715, the second fibre layers 730 forming a second skin of the shear web body.

In a seventh step, shown in Fig. 17g, more second fibre layers 730' are arranged on top of the second insert 724, said layers forming an inner part of a second side of the web foot flange.

In an eighth step, shown in Fig. 17h, an upper web mould part 760 is arranged on top of the material arranged on the lower web mould part 700, and a remaining part of the additional first fibre layers 732 is wrapped against the upper web mould part 760.

In a later step, not shown, a vacuum bag may be arranged on top of the mould parts 700, 760 and the material making up the shear web in order to form a mould cavity, into which a resin is injected and finally hardened or cured in order to form the final shear web.

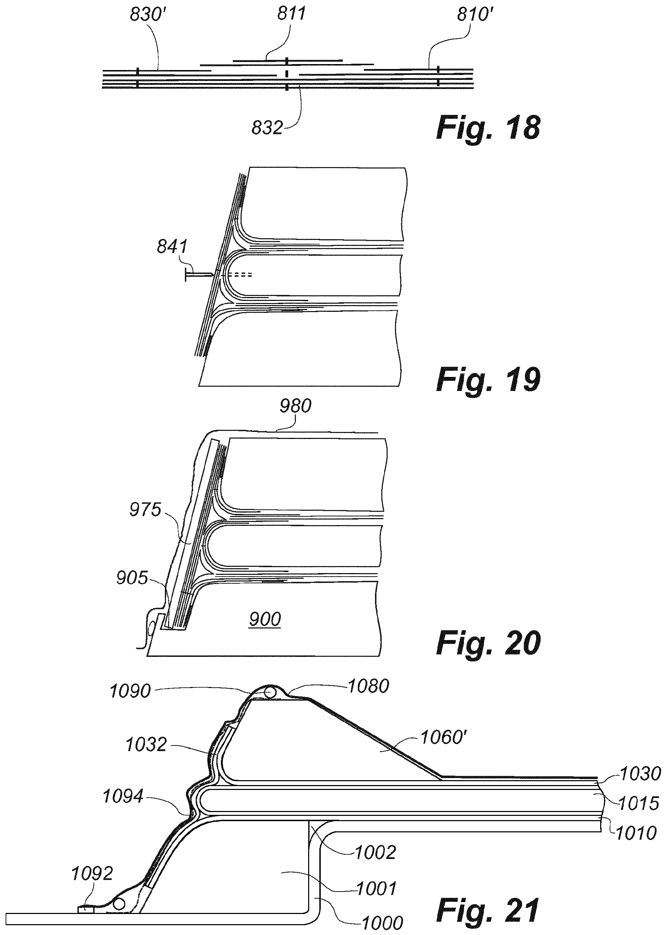

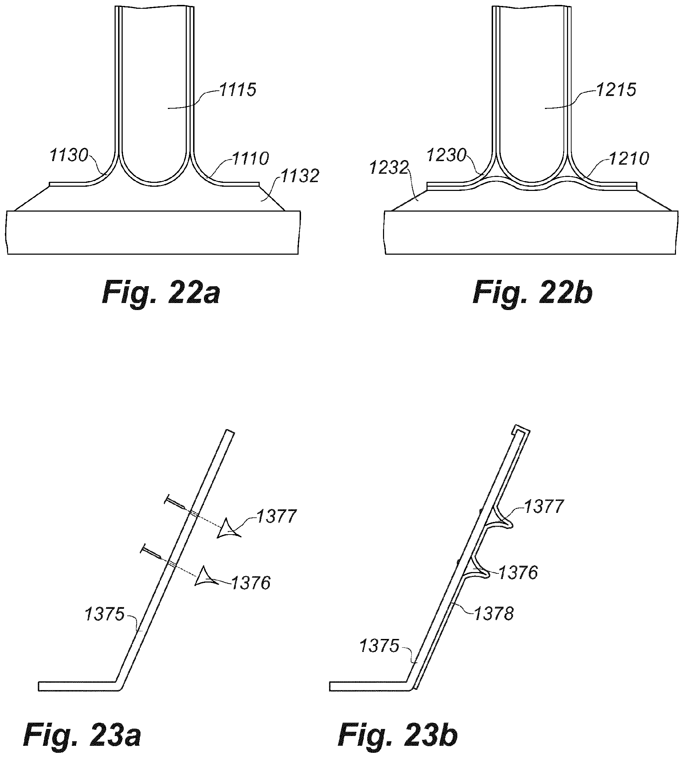

In an alternative embodiment, the fibre material making up the web foot flange may be supplied as a single fibre reinforcement package as shown in Fig. 18. Thus, the fibre reinforcement package may comprise first fibre layers 810', additional fibre layers 832, second fibre layers 830', and internal reinforcement layers 811. The additional first fibre layers 832 may act as a backing layer for the additional fibre material, which may be stitched to the additional first fibre layers 832 such that the different layers are arranged at the correct positions relative to each other. The first insert and second insert may then be arranged afterwards in the fibre reinforcement package.

As shown in Fig. 19, the fibre reinforcement package may be centred to the core material by use of a pin 841. The pin 841 may be made of a polymer material, e.g. polypropylene, nylon, or steel. The pin may further be coated with a release agent so that the pin 841 may be removed at a later point.

Further, as shown in Fig. 20, a lower web mould part 900 may also be provided with a lip 905, and as already mentioned a backing plate 975 may be used in order to provide a straight moulding surface. A vacuum bag 980 may cover the mould system and material in order to form a mould cavity into which a resin is injected and finally hardened or cured in order to form the final shear web.

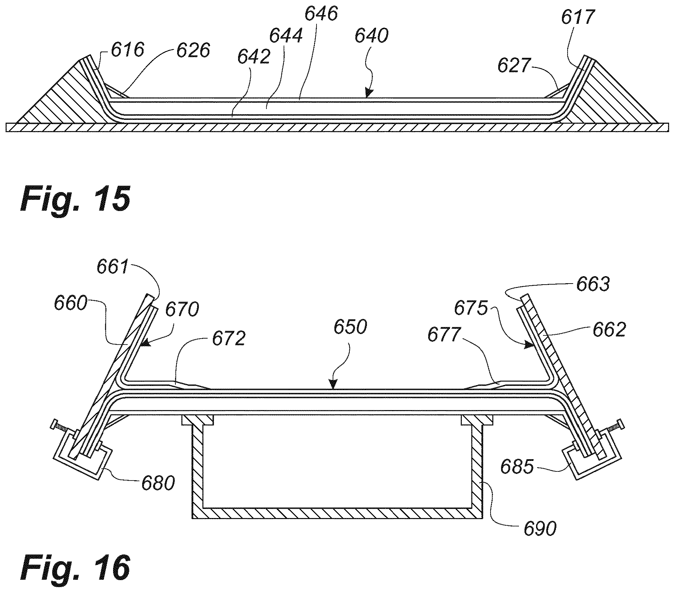

According to a second aspect, the present disclosure also provides a method of forming an I-shaped shear web (or I-web) from a C-shaped shear web (or C-web). Such a method is illustrated in Figs. 15 and 16.

In a first step, a C-web 640 is formed by providing a mould having a flat central part for forming a web body 650 of the C-web and diverging side parts for forming a first flange 616 and a second flange 617 of the C-web 640, respectively. A number of first fibre layers 642 forming a first outer skin, a core material 644 forming part of the web body 650, and a number of second fibre layers 646 forming a second outer skin are arranged in the mould. The C-web 640 may for instance be formed by arranging a vacuum bag (not shown) on top of the fibre material and core material and sealing the vacuum bag against the mould in order to form a mould cavity. The mould cavity may be evacuated by a vacuum pump after which resin may be injected into the mould cavity. Finally, the resin is hardened or cured in order to form the C-web 640. As seen from the figure, the first flange 616 extends from a first end of the web body 650 of a first side of the web body 650, and the second flange 617 extends from a second end of the web body 650 of the first side of the web body 650. The first flange 616 and the second flange may further be reinforced by a first stiffener 626 and a second stiffener 627, respectively, the stiffeners 626, 627 extending between parts of the flanges 616, 617 and a part of the web body 640.

After, the C-web 640 has hardened or cured, the C-web is removed from the mould.

In a subsequent step shown in Fig. 16, the C-web 640 is arranged on top of a support or table 690. A first moulding plate 660 having a first moulding surface 661 is arranged at a first end of the web body 650, and a second moulding plate 662 having a second moulding surface 663. The first moulding plate 660 and the second moulding plate 662 are arranged so that parts of the plates abut the first flange 616 and the second flange 617 of the C-web 640, respectively. A first additional flange 670 or fibre layers 672 forming the first additional flange 670 are arranged so that a part thereof is arranged on the first moulding surface 661 of the first moulding plate 660 and another part thereof is arranged so that it abuts a portion of the surface of the web body 640 on a second side of the web body 640. Similarly, a second additional flange 675 or fibre layers 677 forming the second additional flange 676 are arranged so that a part thereof is arranged on the second moulding surface 663 of the second moulding plate 662 and another part thereof is arranged so that it abuts a portion of the surface of the web body 640 on a second side of the web body 640.

The first moulding plate 660 may be arranged by clamping the first moulding plate by use of a clamp 680 to the first flange 616 of the C-web 640. Similarly, the second moulding plate 662 may be arranged by clamping the second moulding plate 662 by use of a clamp 685 to the second flange 617 of the C-web 640.

The first additional flange 670 and the second additional flange 675 may now be attached to the web body 650 of the C-web 640 in a number of ways. The additional flanges 670, 675 may for instance be glued or otherwise adhered to the second side of the web body 650. The additional flanges 670, 675 may also be mechanically fastened, e.g. by bolting or riveting, to the web body 650 of the C-web. Yet again, the additional flanges may be attached to the C-web by forming one or two mould cavities by sealing a vacuum bag against e.g. the first moulding plate 660 and the second moulding plate 662 after which reinforcement material may be wetted by resin and cured in order to form the finished I-web.

Similarly to the previously described embodiments, a number of inserts may be arranged at the ends of the web body in order to more easily obtain a gradual transition from the web body to the flange.

The reinforcement fibre material described for the various embodiments is preferably glass fibres. However, it could also be other suitable fibre reinforcement material, such as carbon fibres.

The invention has been described with reference to advantageous embodiments. However, the scope of the invention is not limited to the illustrated embodiments, and alterations and modifications can be carried out without deviating from the scope of the invention, which is defined by the claims.

## Claims

1. A method of manufacturing a wind turbine blade component (50; 150; 250; 350; 450; 550) in form of an I-shaped shear web, the shear web having a web body (152) and a first web foot flange (154) at a first end of the web body (152) and a second web foot flange (156) at a second end of the web body (152), wherein the method comprises the steps of:
a) providing an elongated lower web mould part (100; 200; 700; 900; 1000, 1001)having a moulding surface with a central portion (102), which is substantially flat, a first downwardly extending moulding surface portion (104) at a first end of the lower web mould part (100; 200; 700; 900; 1000, 1001), and a second downwardly extending moulding surface portion (106) at a second end of the lower web mould part (100; 200; 700; 900; 1000, 1001), wherein the first and the second moulding surface portion are diverging from the central portion (102) along at least a part of the elongated lower web mould part (100; 200; 700; 900; 1000, 1001),
b) arranging a number of first fibre layers (110; 710, 710'; 810'; 1010; 1110; 1210) on top of the elongated lower web mould part (100; 200; 700; 900; 1000, 1001) and covering the first downwardly extending moulding surface portion (104), the central portion (102), and the second downwardly extending moulding surface portion (106),
c) arranging a number of second fibre layers (130; 730, 730'; 830'; 1030; 1130; 1230) on top of the first fibre layers (110; 710, 710'; 810'; 1010; 1110; 1210),
d) arranging an upper web mould part (160; 260; 760; 1060') on top of the second fibre layers (130; 730, 730'; 830'; 1030; 1130; 1230), the upper web mould part (160; 260; 760; 1060') having a moulding surface with a central portion (160), which is substantially flat, a first upwardly extending moulding surface portion (164) at a first end of the upper web mould part (160; 260; 760; 1060'), and a second upwardly extending moulding surface portion at a second end of the upper web mould part (160; 260; 760; 1060'), wherein the first and the second moulding surface portion are converging from the central portion (160) along at least a part of the elongated upper web mould part (160; 260; 760; 1060'),
e) wrapping ends of the second fibre layers (130; 730, 730'; 830'; 1030; 1130; 1230) against the first and the second upwardly extending moulding surface of the upper web mould part (160; 260; 760; 1060'),
f) forming a mould cavity via the lower web mould part (100; 200; 700; 900; 1000, 1001) and upper web mould part (160; 260; 760; 1060'),
g) supplying resin to the mould cavity, and
h) curing or hardening the resin in order to form said wind turbine blade component (50; 150; 250; 350; 450; 550).

2. A method according to claim 1, wherein between steps b) and c) a core material (115; 215; 315; 415; 515; 715; 1015; 1115; 1215), such as balsawood or foamed polymer, is arranged on top of the first fibre layers (110; 710, 710'; 810'; 1010; 1110; 1210) in the central part of the lower web mould part (100; 200; 700; 900; 1000, 1001).

3. A method according to claim 1 or 2, wherein the mould cavity is formed by sealing at least a first outer mould part against the lower web mould part (100; 200; 700; 900; 1000, 1001) and the upper web mould part (160; 260; 760; 1060'), the at least first outer mould part e.g. comprising at least a vacuum bag (180; 1080).

4. A method according to any of the preceding claims, wherein the mould cavity prior to supplying the resin is evacuated by use of a vacuum source.

5. A method according to any of the preceding claims, wherein the upper web mould part in a subsequent step is removed from the wind turbine component (50; 150; 250; 350; 450; 550), and the wind turbine component (50; 150; 250; 350; 450; 550) in a following step is removed from the lower web mould part (100; 200; 700; 900; 1000, 1001).

6. A method according to one of the preceding claims, wherein at least a first insert is arranged at the first end of the lower web part, wherein said first insert (120, 122, 124, 126; 220; 320; 420; 520) is adapted to provide a gradual transition from the web body (152) to the first web foot flange (154) and/or a second insert 124, 126; 220; 320; 420; 520) is arranged at the first end of the lower web part, wherein said first insert 124, 126; 220; 320; 420; 520) is adapted to provide a gradual transition from the web body (152) to another part of the first web foot flange (154), the first insert 124, 126; 220; 320; 420; 520) and/or the second insert 124, 126; 220; 320; 420; 520) being e.g. substantially wedge shaped.

7. A method according to any of the preceding claims, wherein the first fibre layers (110; 710, 710'; 810'; 1010; 1110; 1210) are cut along lower surfaces of the downwardly extending moulding surface portions and/or the second fibre layers (130; 730, 730'; 830'; 1030; 1130; 1230) are cut along lower surfaces of the downwardly extending moulding surface portions or along upper surfaces of the upwardly extending moulding surface portions.

8. A method according to any of the preceding claims, wherein the ends of the second fibre layers (130; 730, 730'; 830'; 1030; 1130; 1230) in step e) are retained against the first and the second upwardly extending moulding surfaces of the upper web mould part (160; 260; 760; 1060') by use of retaining means, such as magnets.

9. A shear web mould system for manufacturing a wind turbine component (50; 150; 250; 350; 450; 550) in form of an I-shaped shear web having a web body (152) and a first web foot flange (154) at a first end of the web body (152) and a second web foot flange (156) at a second end of the web body (152)f, wherein the system comprises:
- an elongated lower web mould part (100; 200; 700; 900; 1000, 1001) having a moulding surface with
- a central portion (102), which is substantially flat,
- a first downwardly extending moulding surface portion (104) at a first end of the lower web mould part (100; 200; 700; 900; 1000, 1001), and
- a second downwardly extending moulding surface portion (106) at a second end of the lower web mould part (100; 200; 700; 900; 1000, 1001), wherein
- the first and the second moulding surface portion are diverging from the central portion (102) along at least a part of the elongated lower web mould part (100; 200; 700; 900; 1000, 1001), and
- an elongated upper web mould part (160; 260; 760; 1060') having a moulding surface with
- a central portion (160), which is substantially flat,
- a first upwardly extending moulding surface portion (164) at a first end of the upper web mould part (160; 260; 760; 1060'), and
- a second upwardly extending moulding surface portion at a second end of the upper web mould part (160; 260; 760; 1060'), wherein
- the first and the second moulding surface portions are converging from the central portion (160) along at least a part of the elongated upper web mould part (160; 260; 760; 1060').

10. A shear web mould system according to claim 9, wherein the angle of the first downwardly extending moulding surface portion (104) is substantially equal to the angle of the first upwardly extending surface portion (164) and/or the angle of the second downwardly extending moulding surface portion (106) is substantially equal to the angle of the second upwardly extending surface portion.

11. A shear web mould system according to any of claims 9-10,
wherein the first downwardly extending surface portion has an end portion, which corresponds to an end portion of the first web foot flange (154), and wherein the second downwardly extending surface portion (106) has an end portion, which corresponds to an end portion of the second web foot flange (156), and/or
wherein the first upwardly extending surface portion (164) has an end portion, which corresponds to an end portion of the first web foot flange (154), and wherein the second upwardly extending surface portion has an end portion, which corresponds to an end portion of the second web foot flange (156).

12. A shear web mould system according to any of claims 9-11, wherein the lower web mould part (100; 200; 700; 900; 1000, 1001) and/or the upper web mould part (160; 260; 760; 1060') are made of a foamed polymer covered by a hard surface coating, which provides the moulding surface, e.g. wherein the hard surface coating is made from a polyurea material.

13. A shear web mould system according to any of claims 9-12, wherein the lower web mould part (100; 200; 700; 900; 1000, 1001) is modular having a central mould part (100) with a raised central part, which comprises a first side wall and a second side wall, wherein
- a first mould insert (1001) is arranged at the first side wall of the raised central part so as to form the first downwardly extending moulding surface portion (104) of the lower web mould part (100; 200; 700; 900; 1000, 1001), and/or
- a second mould insert is arranged at the second side wall of the raised central part so as to form the first downwardly extending moulding surface portion (104) of the lower web mould part (100; 200; 700; 900; 1000, 1001).

14. A shear web mould system according to any of claims 9-13, wherein the upper web mould part (160; 260; 760; 1060') is modular and comprises a first upper web mould part (160; 260; 760; 1060') for forming the first upwardly extending moulding surface portion (164) and a second upper web mould part (160; 260; 760; 1060') for forming the second upwardly extending moulding surface portion.

## Patentansprüche

1. Verfahren zum Herstellen einer Windkraftanlagenflügelkomponente (50; 150; 250; 350; 450; 550) in Gestalt eines I-förmigen Scherstegs, wobei der Schersteg einen Stegkörper (152) und einen ersten Stegfußflansch (154) an einem ersten Ende des Stegkörpers (152) und einen zweiten Stegfußflansch (156) an einem zweiten Ende des Stegkörpers (152) aufweist, wobei das Verfahren folgende Schritte umfasst:
a) Bereitstellen eines langgestreckten unteren Stegformwerkzeugteils (100; 200; 700; 900; 1000, 1001), der eine Formgebungsfläche mit einem mittleren Abschnitt (102), der im Wesentlichen eben ist, einem ersten sich nach unten erstreckenden Formgebungsflächenabschnitt (104) an einem ersten Ende des unteren Stegformwerkzeugteils (100; 200; 700; 900; 1000, 1001) und einem zweiten sich nach unten erstreckenden Formgebungsflächenabschnitt (106) an einem zweiten Ende des unteren Stegformwerkzeugteils (100; 200; 700; 900; 1000, 1001) aufweist, wobei der erste und der zweite Formgebungsflächenabschnitt sich entlang mindestens eines Teils des langgestreckten unteren Stegformwerkzeugteils (100; 200; 700; 900; 1000, 1001) von dem mittleren Abschnitt (102) voneinander weg erstrecken,
b) Anordnen einer Anzahl erster Faserschichten (110; 710, 710'; 810'; 1010; 1110; 1210) auf dem langgestreckten unteren Stegformwerkzeugteil (100; 200; 700; 900; 1000, 1001) und Abdecken des ersten sich nach unteren erstreckenden Formgebungsflächenabschnitts (104), des mittleren Abschnitts (102) und des zweiten sich nach unten erstreckenden Formgebungsflächenabschnitts (106),
c) Anordnen einer Anzahl zweiter Faserschichten (130; 730, 730'; 830'; 1030; 1130; 1230) auf den ersten Faserschichten (110; 710, 710'; 810'; 1010; 1110; 1210),
d) Anordnen eines oberen Stegformwerkzeugteils (160; 260; 760; 1060') auf den zweiten Faserschichten (130; 730, 730'; 830'; 1030; 1130; 1230), wobei der obere Stegformwerkzeugteil (160; 260; 760; 1060') eine Formgebungsfläche mit einem mittleren Abschnitt (160), der im Wesentlichen eben ist, einem ersten sich nach oben erstreckenden Formgebungsflächenabschnitt (164) an einem ersten Ende des oberen Stegformwerkzeugteils (160; 260; 760; 1060') und einem zweiten sich nach oben erstreckenden Formgebungsflächenabschnitt an einem zweiten Ende des oberen Stegformwerkzeugteils (160; 260; 760; 1060') aufweist, wobei der erste und der zweite Formgebungsflächenabschnitt sich entlang mindestens eines Teils des langgestreckten oberen Stegformwerkzeugteils (160; 260; 760; 1060') von dem mittleren Abschnitt (160) aus aufeinander zu erstrecken,
e) Legen von Enden der zweiten Faserschichten (130; 730, 730'; 830'; 1030; 1130; 1230) an die erste und die zweite sich nach oben erstreckende Formgebungsfläche des oberen Stegformwerkzeugteils (160; 260; 760; 1060'),
f) Bilden einer Formwerkzeughöhlung mittels des unteren Stegformwerkzeugteils (100; 200; 700; 900; 1000, 1001) und des oberen Stegformwerkzeugteils (160; 260; 760; 1060'),
g) Zuführen von Harz in die Formwerkzeughöhlung, und
h) Abbinden oder Aushärten des Harzes, um die Windkraftanlagenflügelkomponente (50; 150; 250; 350; 450; 550) zu bilden.

2. Verfahren nach Anspruch 1, wobei zwischen Schritten b) und c) ein Kernmaterial (115; 215; 315; 415; 515; 715; 1015; 1115; 1215), wie etwa Balsaholz oder Polymerschaumstoff, auf den ersten Faserschichten (110; 710, 710'; 810'; 1010; 1110; 1210) in dem mittleren Teil des unteren Stegformwerkzeugteils (100; 200; 700; 900; 1000, 1001) angeordnet wird.

3. Verfahren nach Anspruch 1 oder 2, wobei die Formwerkzeughöhlung gebildet wird, indem mindestens ein erster äußerer Formwerkzeugteil an dem unteren Stegformwerkzeugteil (100; 200; 700; 900; 1000, 1001) und dem oberen Stegformwerkzeugteil (160; 260; 760; 1060') dichtend angebracht wird, wobei der mindestens erste äußere Formwerkzeugteil z. B. mindestens einen Vakuumbeutel (180; 1080) umfasst.

4. Verfahren nach einem der vorangehenden Ansprüche, wobei die Formwerkzeughöhlung vor dem Zuführen des Harzes durch Verwenden einer Vakuumquelle evakuiert wird.

5. Verfahren nach einem der vorangehenden Ansprüche, wobei der obere Stegformwerkzeugteil in einem anschließenden Schritt von der Windkraftanlagenkomponente (50; 150; 250; 350; 450; 550) entfernt wird und die Windkraftanlagenkomponente (50; 150; 250; 350; 450; 550) in einem folgenden Schritt von dem unteren Stegformwerkzeugteil (100; 200; 700; 900; 1000, 1001) entfernt wird.

6. Verfahren nach einem der vorangehenden Ansprüche, wobei mindestens ein erster Einsatz an dem ersten Ende des unteren Stegteils angeordnet ist, wobei der erste Einsatz (120, 122, 124, 126; 220; 320; 420; 520) dazu angepasst ist, einen graduellen Übergang von dem Stegkörper (152) zu dem ersten Stegfußflansch (154) bereitzustellen, und/oder ein zweiter Einsatz (124, 126; 220; 320; 420; 520) an dem ersten Ende des unteren Stegteils angeordnet ist, wobei der erste Einsatz (124, 126; 220; 320; 420; 520) dazu angepasst ist, einen graduellen Übergang von dem Stegkörper (152) zu einem anderen Teil des ersten Stegfußflanschs (154) bereitzustellen, wobei der erste Einsatz (124, 126; 220; 320; 420; 520) und/oder der zweite Einsatz (124, 126; 220; 320; 420; 520) z. B. im Wesentlichen keilförmig sind.

7. Verfahren nach einem der vorangehenden Ansprüche, wobei die ersten Faserschichten (110; 710, 710'; 810'; 1010; 1110; 1210) entlang unterer Oberflächen der sich nach unten erstreckenden Formgebungsflächenabschnitte zugeschnitten werden und/oder die zweiten Faserschichten (130; 730, 730'; 830'; 1030; 1130; 1230) entlang unterer Oberflächen der sich nach unten erstreckenden Formgebungsflächenabschnitte oder entlang oberer Oberflächen der sich nach oben erstreckenden Formgebungsflächenabschnitte zugeschnitten werden.

8. Verfahren nach einem der vorangehenden Ansprüche, wobei die Enden der zweiten Faserschichten (130; 730, 730'; 830'; 1030; 1130; 1230) in Schritt e) durch die Verwendung von Haltemitteln, wie etwa Magneten, an der ersten und der zweiten sich nach oben erstreckenden Formgebungsfläche des oberen Stegformwerkzeugteils (160; 260; 760; 1060') gehalten werden.

9. Schersteg-Formwerkzeugsystem zum Herstellen einer Windkraftanlagenkomponente (50; 150; 250; 350; 450; 550) in Gestalt eines I-förmigen Scherstegs, mit einem Stegkörper (152) und einem ersten Stegfußflansch (154) an einem ersten Ende des Stegkörpers (152) und einem zweiten Stegfußflansch (156) an einem zweiten Ende des Stegkörpers (152), wobei das System Folgendes umfasst:
- einen langgestreckten unteren Stegformwerkzeugteil (100; 200; 700; 900; 1000, 1001), der eine Formgebungsfläche mit Folgendem aufweist:
- einem mittleren Abschnitt (102), der im Wesentlichen eben ist,
- einem ersten sich nach unten erstreckenden Formgebungsflächenabschnitt (104) an einem ersten Ende des unteren Stegformwerkzeugteils (100; 200; 700; 900; 1000, 1001), und
- einem zweiten sich nach unten erstreckenden Formgebungsflächenabschnitt (106) an einem zweiten Ende des unteren Stegformwerkzeugteils (100; 200; 700; 900; 1000, 1001), wobei
- der erste und der zweite Formgebungsflächenabschnitt entlang mindestens eines Teils des langgestreckten unteren Stegformwerkzeugteils (100; 200; 700; 900; 1000, 1001) sich von dem mittleren Abschnitt (102) aus voneinander weg erstrecken, und
- einen langgestreckten oberen Stegformwerkzeugteil (160; 260; 760; 1060'), der eine Formgebungsfläche aufweist, mit
- einem mittleren Abschnitt (160), der im Wesentlichen eben ist,
- einem ersten sich nach oben erstreckenden Formgebungsflächenabschnitt (164) an einem ersten Ende des oberen Stegformwerkzeugteils (160; 260; 760; 1060'), und
- einem zweiten sich nach oben erstreckenden Formgebungsflächenabschnitt an einem zweiten Ende des oberen Stegformwerkzeugteils (160; 260; 760; 1060'), wobei
- der erste und der zweite Formgebungsflächenabschnitt entlang mindestens eines Teils des langgestreckten unteren Stegformwerkzeugteils (160; 260; 760; 1060') sich von dem mittleren Abschnitt (160) aufeinander zu erstrecken.

10. Schersteg-Formwerkzeugsystem nach Anspruch 9, wobei der Winkel des ersten sich nach unten erstreckenden Formgebungsflächenabschnitts (104) im Wesentlichen gleich dem Winkel des ersten sich nach oben erstreckenden Flächenabschnitts (164) ist und/oder der Winkel des zweiten sich nach unten erstreckenden Formgebungsflächenabschnitts (106) im Wesentlichen gleich dem Winkel des zweiten sich nach oben erstreckenden Flächenabschnitts ist.

11. Schersteg-Formwerkzeugsystem nach einem der Ansprüche 9-10,
wobei der erste sich nach unten erstreckende Flächenabschnitt einen Endabschnitt aufweist, der einem Endabschnitt des ersten Stegfußflanschs (154) entspricht, und wobei der zweite sich nach unten erstreckende Flächenabschnitt (106) einen Endabschnitt aufweist, der einem Endabschnitt des zweiten Stegfußflanschs (156) entspricht, und/oder
wobei der erste sich nach oben erstreckende Flächenabschnitt (164) einen Endabschnitt aufweist, der einem Endabschnitt des ersten Stegfußflanschs (154) entspricht, und wobei der zweite sich nach oben erstreckende Flächenabschnitt einen Endabschnitt aufweist, der einem Endabschnitt des zweiten Stegfußflanschs (156) entspricht.

12. Schersteg-Formwerkzeugsystem nach einem der Ansprüche 9-11, wobei der untere Stegformwerkzeugteil (100; 200; 700; 900; 1000, 1001) und/oder der obere Stegformwerkzeugteil (160; 260; 760; 1060') aus einem Polymerschaumstoff gefertigt sind, der von einer harten Oberflächenbeschichtung abgedeckt ist, die die Formgebungsoberfläche bereitstellt, z. B. wobei die harte Oberflächenbeschichtung aus einem Polyharnstoffmaterial gefertigt ist.

13. Schersteg-Formwerkzeugsystem nach einem der Ansprüche 9-12, wobei der untere Stegformwerkzeugteil (100; 200; 700; 900; 1000, 1001) modular ist und einen mittleren Formwerkzeugteil (100) mit einem erhöhten mittleren Teil, der eine erste Seitenwand und eine zweite Seitenwand umfasst, aufweist, wobei
- ein erster Formwerkzeugeinsatz (1001) an der ersten Seitenwand des erhöhten mittleren Teils angeordnet ist, um den ersten sich nach unten erstreckenden Formgebungsflächenabschnitt (104) des unteren Stegformwerkzeugteils (100; 200; 700; 900; 1000, 1001) zu bilden, und/oder
- ein zweiter Formwerkzeugeinsatz an der zweiten Seitenwand des erhöhten mittleren Teils angeordnet ist, um den ersten sich nach unten erstreckenden Formgebungsflächenabschnitt (104) des unteren Stegformwerkzeugteils (100; 200; 700; 900; 1000, 1001) zu bilden.

14. Schersteg-Formwerkzeugsystem nach einem der Ansprüche 9-13, wobei der obere Stegformwerkzeugteil (160; 260; 760; 1060') modular ist und einen ersten oberen Stegformwerkzeugteil (160; 260; 760; 1060') zum Bilden des ersten sich nach oben erstreckenden Formgebungsflächenabschnitts (164) und einen zweiten oberen Stegformwerkzeugteil (160; 260; 760; 1060') zum Bilden des zweiten sich nach oben erstreckenden Formgebungsflächenabschnitts umfasst.

## Revendications

1. Procédé de fabrication d'un composant de pale d'éolienne (50 ; 150 ; 250 ; 350 ; 450 ; 550) sous la forme d'une âme de cisaillement en forme de I, l'âme de cisaillement ayant un corps d'âme (152) et une première bride de pied d'âme (154) au niveau d'une première extrémité du corps d'âme (152) et une deuxième bride de pied d'âme (156) au niveau d'une deuxième extrémité du corps d'âme (152), dans lequel le procédé comporte les étapes consistant à :
a) mettre en œuvre une partie de moule d'âme inférieure allongée (100 ; 200 ; 700 ; 900 ; 1000, 1001) ayant une surface de moulage avec une partie centrale (102), qui est sensiblement plate, une première partie de surface de moulage s'étendant vers le bas (104) au niveau d'une première extrémité de la partie de moule d'âme inférieure (100 ; 200 ; 700 ; 900 ; 1000, 1001), et une deuxième partie de surface de moulage s'étendant vers le bas (106) au niveau d'une deuxième extrémité de la partie de moule d'âme inférieure (100 ; 200 ; 700 ; 900 ; 1000, 1001), dans lequel les première et deuxième parties de surface de moulage divergent en provenance de la partie centrale (102) le long au moins d'une partie de la partie de moule d'âme inférieure allongée (100 ; 200 ; 700 ; 900 ; 1000, 1001),
b) agencer un certain nombre de premières couches de fibres (110 ; 710, 710' ; 810' ; 1010 ; 1110 ; 1210) par-dessus la partie de moule d'âme inférieure allongée (100 ; 200 ; 700 ; 900 ; 1000, 1001) et recouvrir la première partie de surface de moulage s'étendant vers le bas (104), la partie centrale (102), et la deuxième partie de surface de moulage s'étendant vers le bas (106),
c) agencer un certain nombre de deuxièmes couches de fibres (130 ; 730, 730' ; 830' ; 1030 ; 1130 ; 1230) par-dessus les premières couches de fibres (110 ; 710, 710' ; 810' ; 1010 ; 1110 ; 1210),
d) agencer une partie de moule d'âme supérieure (160 ; 260 ; 760 ; 1060') par-dessus les deuxièmes couches de fibres (130 ; 730, 730' ; 830' ; 1030 ; 1130 ; 1230), la partie de moule d'âme supérieure (160 ; 260 ; 760 ; 1060') ayant une surface de moulage avec une partie centrale (160), qui est sensiblement plate, une première partie de surface de moulage s'étendant vers le haut (164) au niveau d'une première extrémité de la partie de moule d'âme supérieure (160 ; 260 ; 760 ; 1060'), et une deuxième partie de surface de moulage s'étendant vers le haut au niveau d'une deuxième extrémité de la partie de moule d'âme supérieure (160 ; 260 ; 760 ; 1060'), dans lequel les première et deuxième parties de surface de moulage convergent en provenance de la partie centrale (160) le long au moins d'une partie de la partie de moule d'âme supérieure allongée (160 ; 260 ; 760 ; 1060'),
e) enrouler des extrémités des deuxièmes couches de fibres (130 ; 730, 730' ; 830' ; 1030 ; 1130 ; 1230) contre les première et deuxième surfaces de moulage s'étendant vers le haut de la partie de moule d'âme supérieure (160 ; 260 ; 760 ; 1060'),
f) former une cavité de moule par l'intermédiaire de la partie de moule d'âme inférieure (100 ; 200 ; 700 ; 900 ; 1000, 1001) et de la partie de moule d'âme supérieure (160 ; 260 ; 760 ; 1060'),
g) fournir de la résine dans la cavité de moule, et
h) faire sécher ou durcir la résine afin de former ledit composant de pale d'éolienne (50 ; 150 ; 250 ; 350 ; 450 ; 550).

2. Procédé selon la revendication 1, dans lequel, entre les étapes b) et c), un matériau de noyau (115 ; 215 ; 315 ; 415 ; 515 ; 715 ; 1015 ; 1115 ; 1215), tel que du balsa ou du polymère expansé, est agencé par-dessus les premières couches de fibres (110 ; 710, 710' ; 810' ; 1010 ; 1110 ; 1210) dans la partie centrale de la partie de moule d'âme inférieure (100 ; 200 ; 700 ; 900 ; 1000, 1001).

3. Procédé selon la revendication 1 ou la revendication 2, dans lequel la cavité de moule est formée en scellant au moins une première partie de moule extérieure contre la partie de moule d'âme inférieure (100 ; 200 ; 700 ; 900 ; 1000, 1001) et la partie de moule d'âme supérieure (160 ; 260 ; 760 ; 1060'), ladite au moins première partie de moule extérieure par exemple comportant au moins un sac sous vide (180 ; 1080).

4. Procédé selon l'une quelconque des revendications précédentes, dans lequel la cavité de moule, avant la fourniture de résine, est évacuée par l'utilisation d'une source de vide.

5. Procédé selon l'une quelconque des revendications précédentes, dans lequel la partie de moule d'âme supérieure, au cours d'une étape ultérieure, est retirée du composant d'éolienne (50 ; 150 ; 250 ; 350 ; 450 ; 550), et le composant d'éolienne (50 ; 150 ; 250 ; 350 ; 450 ; 550), au cours d'une étape suivante, est retiré de la partie de moule d'âme inférieure (100 ; 200 ; 700 ; 900 ; 1000, 1001).

6. Procédé selon l'une quelconque des revendications précédentes, dans lequel au moins une première pièce rapportée est agencée au niveau de la première extrémité de la partie d'âme inférieure, dans lequel ladite première pièce rapportée (120, 122, 124, 126 ; 220 ; 320 ; 420 ; 520) est adaptée pour fournir une transition progressive allant du corps d'âme (152) à la première bride de pied d'âme (154) et/ou une deuxième pièce rapportée (124, 126 ; 220 ; 320 ; 420 ; 520) est agencée au niveau de la première extrémité de la partie d'âme inférieure, dans lequel ladite première pièce rapportée (124, 126 ; 220 ; 320 ; 420 ; 520) est adaptée pour fournir une transition progressive allant du corps d'âme (152) à une autre partie de la première bride de pied d'âme (154), la première pièce rapportée (124, 126 ; 220 ; 320 ; 420 ; 520) et/ou la deuxième pièce rapportée (124, 126 ; 220 ; 320 ; 420 ; 520) étant par exemple sensiblement cunéiformes.

7. Procédé selon l'une quelconque des revendications précédentes, dans lequel les premières couches de fibres (110 ; 710, 710' ; 810' ; 1010 ; 1110 ; 1210) sont coupées le long de surfaces inférieures des parties de surface de moulage s'étendant vers le bas et/ou les deuxièmes couches de fibres (130 ; 730, 730' ; 830' ; 1030 ; 1130 ; 1230) sont coupées le long de surfaces inférieures des parties de surface de moulage s'étendant vers le bas ou le long de surfaces supérieures des parties de surface de moulage s'étendant vers le haut.

8. Procédé selon l'une quelconque des revendications précédentes, dans lequel les extrémités des deuxièmes couches de fibres (130 ; 730, 730' ; 830' ; 1030 ; 1130 ; 1230), au cours de l'étape e), sont retenues contre les première et deuxième surfaces de moulage s'étendant vers le haut de la partie de moule d'âme supérieure (160 ; 260 ; 760 ; 1060') par l'utilisation de moyens de retenue, tels que des aimants.

9. Système de moule d'âme de cisaillement pour la fabrication d'un composant d'éolienne (50 ; 150 ; 250 ; 350 ; 450 ; 550) sous la forme d'une âme de cisaillement en forme de I ayant un corps d'âme (152) et une première bride de pied d'âme (154) au niveau d'une première extrémité du corps d'âme (152) et une deuxième bride de pied d'âme (156) au niveau d'une deuxième extrémité du corps d'âme (152), dans lequel le système comporte :
- une partie de moule d'âme inférieure allongée (100 ; 200 ; 700 ; 900 ; 1000, 1001) ayant une surface de moulage avec
- une partie centrale (102), qui est sensiblement plate,
- une première partie de surface de moulage s'étendant vers le bas (104) au niveau d'une première extrémité de la partie de moule d'âme inférieure (100 ; 200 ; 700 ; 900 ; 1000, 1001), et
- une deuxième partie de surface de moulage s'étendant vers le bas (106) au niveau d'une deuxième extrémité de la partie de moule d'âme inférieure (100 ; 200 ; 700 ; 900 ; 1000, 1001), dans lequel
- les première et deuxième parties de surface de moulage divergent en provenance de la partie centrale (102) le long au moins d'une partie de la partie de moule d'âme inférieure allongée (100 ; 200 ; 700 ; 900 ; 1000, 1001), et
- une partie de moule d'âme supérieure allongée (160 ; 260 ; 760 ; 1060') ayant une surface de moulage avec
- une partie centrale (160), qui est sensiblement plate,
- une première partie de surface de moulage s'étendant vers le haut (164) au niveau d'une première extrémité de la partie de moule d'âme supérieure (160 ; 260 ; 760 ; 1060'), et
- une deuxième partie de surface de moulage s'étendant vers le haut au niveau d'une deuxième extrémité de la partie de moule d'âme supérieure (160 ; 260 ; 760 ; 1060'), dans lequel
- les première et deuxième parties de surface de moulage convergent en provenance de la partie centrale (160) le long au moins d'une partie de la partie de moule d'âme supérieure allongée (160 ; 260 ; 760 ; 1060').

10. Système de moule d'âme de cisaillement selon la revendication 9, dans lequel l'angle de la première partie de surface de moulage s'étendant vers le bas (104) est sensiblement égal à l'angle de la première partie de surface s'étendant vers le haut (164) et/ou l'angle de la deuxième partie de surface de moulage s'étendant vers le bas (106) est sensiblement égal à l'angle de la deuxième partie de surface s'étendant vers le haut.

11. Système de moule d'âme de cisaillement selon l'une quelconque des revendications 9 à 10,
dans lequel la première partie de surface s'étendant vers le bas a une partie d'extrémité, qui correspond à une partie d'extrémité de la première bride de pied d'âme (154), et dans lequel la deuxième partie de surface s'étendant vers le bas (106) a une partie d'extrémité, qui correspond à une partie d'extrémité de la deuxième bride de pied d'âme (156), et/ou
dans lequel la première partie de surface s'étendant vers le haut (164) a une partie d'extrémité, qui correspond à une partie d'extrémité de la première bride de pied d'âme (154), et dans lequel la deuxième partie de surface s'étendant vers le haut a une partie d'extrémité, qui correspond à une partie d'extrémité de la deuxième bride de pied d'âme (156).

12. Système de moule d'âme de cisaillement selon l'une quelconque des revendications 9 à 11, dans lequel la partie de moule d'âme inférieure (100 ; 200 ; 700 ; 900 ; 1000, 1001) et/ou la partie de moule d'âme supérieure (160 ; 260 ; 760 ; 1060') sont réalisées à partir d'un polymère expansé recouvert d'un revêtement superficiel dur, qui met en œuvre la surface de moulage, par exemple dans lequel le revêtement superficiel dur est réalisé à partir d'un matériau de polyurée.

13. Système de moule d'âme de cisaillement selon l'une quelconque des revendications 9 à 12, dans lequel la partie de moule d'âme inférieure (100 ; 200 ; 700 ; 900 ; 1000, 1001) est modulaire ayant une partie de moule centrale (100) avec une partie centrale surélevée, qui comporte une première paroi latérale et une deuxième paroi latérale, dans lequel
- une première pièce rapportée de moule (1001) est agencée au niveau de la première paroi latérale de la partie centrale surélevée de manière à former la première partie de surface de moulage s'étendant vers le bas (104) de la partie de moule d'âme inférieure (100 ; 200 ; 700 ; 900 ; 1000, 1001), et/ou
- une deuxième pièce rapportée de moule est agencée au niveau de la deuxième paroi latérale de la partie centrale surélevée de manière à former la première partie de surface de moulage s'étendant vers le bas (104) de la partie de moule d'âme inférieure (100 ; 200 ; 700 ; 900 ; 1000, 1001).

14. Système de moule d'âme de cisaillement selon l'une quelconque des revendications 9 à 13, dans lequel la partie de moule d'âme supérieure (160 ; 260 ; 760 ; 1060') est modulaire et comporte une première partie de moule d'âme supérieure (160 ; 260 ; 760 ; 1060') servant à former la première partie de surface de moulage s'étendant vers le haut (164) et une deuxième partie de moule d'âme supérieure (160 ; 260 ; 760 ; 1060') servant à former la deuxième partie de surface de moulage s'étendant vers le haut.
